# EUROPEAN PATENT APPLICATION

(11) **EP 1 603 249 A1**
(43) Date of publication of application: **07.12.2005**
(21) Application number: 04720741.0
(22) Date of filing: 15.03.2004
(51) Int. Cl.: H04B 3/56, H04B 3/02, H03H 7/09

(54) **HIGH FREQUENCY BYPASS UNIT**

(71) Applicant: MITSUBISHI DENKI KABUSHIKI KAISHA, Tokyo 100-8310 (JP)
(72) Inventor: KIMURA, Toru, c/o Mitsubishi Kabushiki Kaisha, Chiyoda-ku, Tokyo 1008310 (JP); MIZUGAI, Y., c/o Mitsubishi Kabushiki Kaisha, Chiyoda-ku, Tokyo 1008310 (JP)
(74) Representative: Pfenning, Meinig & Partner GbR
(86) International application number: PCT/JP2004/003409
(87) International publication number: WO 2005/088858

(57) **Abstract**

According to the present invention, there is provided a high-frequency bypass device for bypassing a communication interruption device that is present in the middle of two electric wires. The high-frequency bypass device includes: split cores that are disposed on the two electric wires at both ends of the communication interruption device; capacitors that are connected to connection ends of the electric wires at both ends of the communication interruption device; and a cable that connects between the corresponding split cores at both ends of the communication interruption device such that the split cores function as transformers. With this arrangement, the high-frequency bypass device can bypass an interruption device without depending on a type of the interruption device, in carrying out transmission of high-frequency signals using optional electric wires as well as power line communication for transmitting high-frequency signals using power lines. It is also easy to install the high-frequency bypass device.

## Description

### TECHNICAL FIELD

The present invention relates to a high-frequency bypass device that transmits communication signals on electric wires by bypassing a communication interruption device that is present in the middle of the electric wires.

### BACKGROUND ART

As a method of transmitting communication signals on electric wires by bypassing a communication interruption device present in the middle of the electric wires, the following method is conventionally known. In a power line communication of transmitting high-frequency signals using power lines, a distribution transformer interrupts communication. Therefore, communication signals on a high-voltage distribution line are transmitted to a low-voltage distribution line by bypassing the distribution transformer (for example, see Patent Document 1).

In other words, the Patent Document 1 discloses a method of transmitting high-frequency signals (that is, a high-frequency bypass transmission method) using power lines for transmitting high-frequency communication signals from a high-voltage distribution line to a low-voltage distribution line by bypassing a distribution transformer. This is achieved by the following arrangements. High-frequency communication signals are superimposed on the high-voltage distribution line. A first capacitor and a resistor connected in series with the capacitor are formed at the interface of the high-voltage distribution line, and both ends of the resistors are connected to the low-voltage distribution line.

Patent Document 1. Japanese Patent Application Laid-open No. 2002-217796

However, the high-frequency bypass transmission method according to the conventional technique has the following problems. In connecting high-frequency signals to high-voltage distribution lines near a power distribution unit to be bypassed, when the power distribution unit to be bypassed is a distribution transformer, the distribution transformer can be bypassed because of large high-frequency impedance. However, when the power distribution unit to be bypassed is a capacitor bank having small high-frequency impedance, high-frequency signals are short-circuited at the connection interface, and bypassed signals cannot be extracted.

When the power distribution unit to be bypassed is a distribution board or the like having a branch, there is an influence of a reflection of signals from branch ends, which aggravates transmission characteristics of bypassed signals. In other words, according to the conventional high-frequency bypass transmission method, in connecting high-frequency signals to high-voltage distribution lines near a power distribution unit to be bypassed, the power distribution unit to be bypassed is limited to only a distribution transformer or the like having large high-frequency impedance.

Furthermore, according to the conventional high-frequency bypass transmission method, a capacitor is formed by winding a conductive tape or sheet around an insulating coating of a high-voltage (or low-voltage) distribution line, or by sandwiching an insulating coating of a high-voltage (or low-voltage) distribution line with split pieces of a conductive cylinder member. The capacitor is formed over 1 meter of the electric wire to secure transmission characteristics. The conventional method also has the problem that the engineering works of forming the capacitor is not easy.

On the other hand, not only the power lines are used to carry out power line communication to transmit high-frequency signals, the electric wires are connected via a switch. When the switch is open-circuited, the switch becomes a communication interruption device. Therefore, when the electric wires at both ends can be connected by bypassing the switch, high-frequency signals can be transmitted using optional electric wires, which can improve communication services.

The present invention has been achieved in the light of the above points. It is an object of the present invention to provide a high-frequency bypass device that can bypass an interruption device without depending on a type of the interruption device, in carrying out transmission of high-frequency signals using optional electric wires as well as power line communication for transmitting high-frequency signals using power lines, and that has easiness in the installation work.

### DISCLOSURE OF INVENTION

According to the present invention, there is provided a high-frequency bypass device for bypassing a communication interruption device that is present in the middle of two electric wires, the high-frequency bypass device including: split cores that are disposed on the two electric wires at both ends of the communication interruption device; capacitors that are connected to connection ends of the electric wires at both ends of the communication interruption device; and a cable that connects between the corresponding split cores at both ends of the communication interruption device such that the cable functions as a transformer.

According to the present invention, the capacitors connected to the connection points of the electric wires at both ends of the communication interruption device prevent signals from receiving influence of characteristics of the communication interruption device. Therefore, the device can be bypassed without depending on the type of the device to be bypassed. Not only power line communication can be achieved to transmit high-frequency signals using power lines, but also high-frequency signals can be transmitted using optional electric wires. In this case, the capacitors can increase the efficiency of extracting high-frequency signals and the efficiency of injecting high-frequency signals by the split cores that function as transformers. The split cores can be disposed to sandwich the electric wires respectively, and the capacitors can be connected to the externally exposed connection ends of the electric wires. Therefore, when the electric wires are power supply lines such as power lines, the installation work can be carried out in the active state.

### BRIEF DESCRIPTION OF DRAWINGS

FIG. 1 is a layout diagram of a high-frequency bypass device according to a first embodiment of the present invention;
FIG. 2 is an equivalent circuit diagram of a circuit configuration of the high-frequency bypass device shown in FIG. 1;
Fig. 3 is a layout diagram of a high-frequency bypass device according to a second embodiment of the present invention;
FIG. 4 is an equivalent circuit diagram of a circuit configuration of the high-frequency bypass device shown in FIG. 3;
FIG. 5 is a layout diagram of a high-frequency bypass device according to a third embodiment of the present invention;
FIG. 6 is an equivalent circuit diagram of a circuit configuration of the high-frequency bypass device shown in FIG. 5;
FIG. 7 is a layout diagram of a high-frequency bypass device according to a fourth embodiment of the present invention; and
FIG. 8 is an equivalent circuit diagram of a circuit configuration of the high-frequency bypass device shown in FIG. 7.

### BEST MODE(S) FOR CARRYING OUT THE INVENTION

Exemplary embodiments of a high-frequency bypass device according to the present invention will be explained below with reference to the accompanying drawings.

### First Embodiment

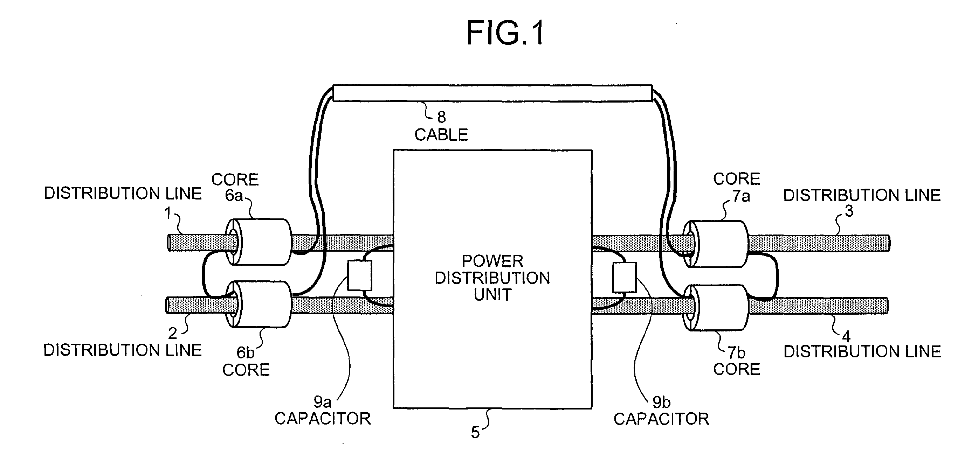

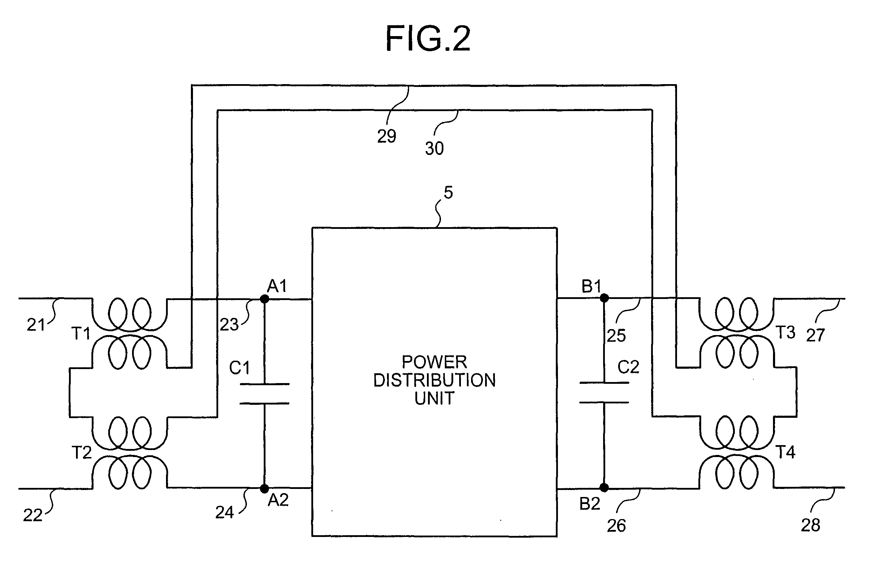

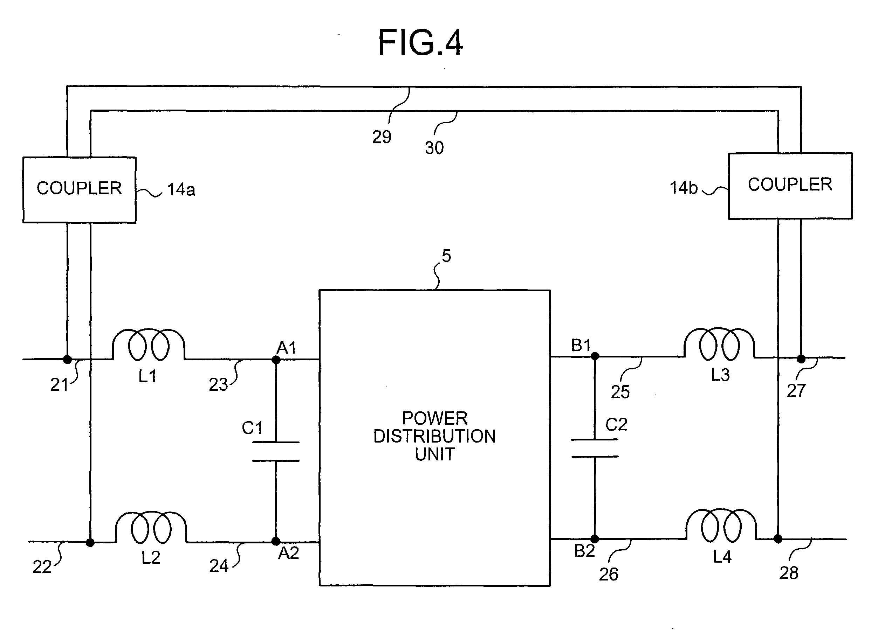

Fig. 1 is a layout diagram of a high-frequency bypass device according to a first embodiment of the present invention. Fig. 2 is an equivalent circuit diagram of a circuit configuration of the high-frequency bypass device shown in Fig. 1. In the first and the subsequent embodiments, to facilitate the understanding of the invention, a power line communication for transmitting high-frequency signals using power lines is explained.

A power distribution unit 5 that interrupts a communication is disposed between distribution lines 1 and 2 and distribution lines 3 and 4. The power distribution unit 5 is a distribution board, a columnar transformer, a capacitor bank or the like. The high-frequency bypass device shown in Fig. 1 is configured to form a communication path of high-frequency signals by connecting at high frequency the distribution lines 1 and 2 at one end of the power distribution unit 5 with the distribution lines 3 and 4 at the other end of the power distribution unit 5 by bypassing the power distribution unit 5.

In other words, split cores 6a and 6b are disposed to sandwich the distribution lines 1 and 2 respectively at one end of the power distribution unit 5. Split cores 7a and 7b are disposed to sandwich the distribution lines 3 and 4 respectively at the other end of the power distribution unit 5. The cores 6a and 6b and the cores 7a and 7b are connected to each other via a cable 8 that is passed through these cores. With this arrangement, the cores 6a, 6b, 7a, and 7b function as transformers respectively. A capacitor 9a is disposed between connection ends of the power distribution unit 5 and the distribution lines 1 and 2 respectively, and a capacitor 9b is disposed between connection ends of the power distribution unit 5 and the distribution lines 3 and 4 respectively.

Therefore, a circuit configuration of the high-frequency bypass device shown in Fig. 1 becomes as shown in Fig. 2. At one end of the power distribution unit 5, one end of a distribution line 21 of which the other end is connected to the outside is connected to one end of a distribution line 23 via one input and output winding of a transformer T1 formed by the core 6a. The other end of the distribution line 23 is connected to a connection point A1 at one end of the power distribution unit 5. The above explains the relationship between the distribution line 1 and the core 6a shown in Fig. 1.

One end of a distribution line 22 of which the other end is connected to the outside is connected to one end of a distribution line 24 via one input and output winding of a transformer T2 formed by the core 6b. The other end of the distribution line 24 is connected to a connection point A2 at one end of the power distribution unit 5. The above explains the relationship between the distribution line 2 and the core 6b shown in Fig. 1.

Similarly, at the other end of the power distribution unit 5, one end of a distribution line 27 of which the other end is connected to the outside is connected to one end of a distribution line 25 via one input and output winding of a transformer T3 formed by the core 7a. The other end of the distribution line 25 is connected to a connection point B1 at the other end of the power distribution unit 5. The above explains the relationship between the distribution line 3 and the core 7a shown in Fig. 1.

One end of a distribution line 28 of which the other end is connected to the outside is connected to one end of a distribution line 26 via one input and output winding of a transformer T4 formed by the core 7b. The other end of the distribution line 26 is connected to a connection point B2 at the other end of the power distribution unit 5. The above explains the relationship between the distribution line 4 and the core 7b shown in Fig. 1.

One end of the other input and output winding of the transformer T1 and one end of the other input and output winding of the transformer T2 are connected in common. One end of the other input and output winding of the transformer T3 and one end of the other input and output winding of the transformer T4 are connected in common. The other end of the other input and output winding of the transformer T1 and the other end of the other input and output winding of the transformer T3 are connected together via a cable 29. The other end of the other input and output winding of the transformer T2 and the other end of the other input and output winding of the transformer T4 are connected together via a cable 30. The above explains the relationship between the cores 6a and 6b and the cores 7a and 7b shown in Fig. 1.

A capacitor C1 that is the capacitor 9a shown in Fig. 1 is connected to between the connection point A1 and the connection point A2 at one end of the power distribution unit 5. A capacitor C2 that is the capacitor 9b shown in Fig. 1 is connected to between the connection point B1 and the connection point B2 at the other end of the power distribution unit 5.

The operation of the high-frequency bypass device according to the first embodiment having the above configuration is explained below with reference to Fig. 2.

High-frequency signals for power line communication are injected to one end of the distribution lines 21 and 22 respectively. A bypass method of extracting the high-frequency signals from the transformers T1 and T2 and injecting the high-frequency signals to the transformers T3 and T4 via the cables 29 and 30 is explained first.

At one end of the distribution lines 21 and 22 respectively, power line communication signals as high-frequency signals and power of a commercial frequency are superimposed. Out of these signals, only the high-frequency signals are extracted to the cables 29 and 30 by the transformers T1 and T2 respectively. The extracted high-frequency signals are transmitted to one input output winding of the transformers T3 and T4 respectively through the cables 29 and 30, and are injected to the distribution lines 27 and 28 from the other input and output winding of the transformers T3 and T4 respectively.

In this case, the capacitor C1 disposed between the connection point A1 and the connection point A2 of the power distribution unit 5 has the following two functions.

A first function is to decrease the high-frequency impedance between the connection point A1 and the connection point A2, thereby avoiding the influence of loss characteristics of the power distribution unit 5 in a high-frequency band used by the high-frequency signals at the point of extracting the high-frequency signals. The power distribution unit 5 includes a distribution board, a columnar transformer, a capacitor bank or the like, which have their own loss characteristics.

In this case, because the capacitor C1 is disposed between the connection point A1 and the connection point A2 of the power distribution unit 5, high-frequency signals are short-circuited between the connection point A1 and the connection point A2. Therefore, loss characteristics of the power distribution unit 5 disappear at the extraction point of the high-frequency signals. In other words, because the transformers T1 and T2 do not receive the influence of the characteristics of the power distribution unit 5, high-frequency signals can be extracted from the distribution lines 21 and 22, and can be transmitted to the cables 29 and 30.

A second function is to increase the efficiency of extracting the high-frequency signals by the transformers T1 and T2. The transformer T1 generates a potential difference of impedance due to inductance between the distribution line 21 and the distribution line 23. Similarly, the transformer T2 generates a potential difference of impedance due to inductance between the distribution line 22 and the distribution line 24.

Voltages of the high-frequency signals from the distribution line 21 and the distribution line 22 are distributed respectively according to proportions of a potential difference generated in the transformer T1, a potential difference generated in the transformer T2, and a potential difference between the connection point A1 and the connection point A2 of the power distribution unit 5. The potential differences generated in the transformers T1 and T2 respectively become the largest when the potential difference between the connection point A1 and the connection point A2 of the power distribution unit 5 becomes the smallest, that is, when the impedance between the connection point A1 and the connection point A2 becomes zero.

Therefore, when the capacitor C1 is connected to between the connection point A1 and the connection point A2 to short-circuit the high-frequency signals, the potential differences generated in the transformers T1 and T2 can be maximized. Accordingly, the efficiency of extracting the high-frequency signals from the distribution lines 21 and 22 by the transformers T1 and T2 can be increased.

Similarly, the capacitor C2 disposed between the connection point B1 and the connection point B2 of the power distribution unit 5 has the following two functions.

A first function is to decrease the high-frequency impedance between the connection point B1 and the connection point B2, thereby avoiding the influence of loss characteristics of the power distribution unit 5 in a high-frequency band used by the high-frequency signals at the point of injecting the high-frequency signals. The power distribution unit 5 includes a distribution board, a columnar transformer, a capacitor bank or the like, which have their own loss characteristics.

In this case, because the capacitor C2 is disposed between the connection point B1 and the connection point B2 of the power distribution unit 5, high-frequency signals are short-circuited between the connection point B1 and the connection point B2. Therefore, loss characteristics of the power distribution unit 5 disappear at the injection point of the high-frequency signals. In other words, because the transformers T3 and T4 do not receive the influence of the characteristics of the power distribution unit 5, high-frequency signals can be extracted from the cables 29 and 30, and can be injected to the distribution lines 25 and 27.

The second function is to increase the efficiency of injecting the high-frequency signals from the transformers T3 and T4 to the distribution lines 25 and 27. The transformer T3 generates a potential difference of impedance due to inductance between the distribution line 25 and the distribution line 27. Similarly, the transformer T4 generates a potential difference of impedance due to inductance between the distribution line 26 and the distribution line 28.

A potential difference generated in the transformer T3 and a potential difference generated in the transformer T4 are distributed respectively according to proportions of a potential difference between the connection point B1 and the connection point B2 of the power distribution unit 5, and potential differences of terminating resistors of receiving devices connected to the distribution lines 27 and 28. The potential differences due to the terminating resistors of the receiving devices become the largest when the potential difference between the connection point B1 and the connection point B2 of the power distribution unit 5 becomes the smallest, that is, when the impedance between the connection point B1 and the connection point B2 becomes zero.

Therefore, when the capacitor C2 is connected to between the connection point B1 and the connection point B2 to short-circuit the high-frequency signals, the potential differences due to the terminating resistors of the receiving devices can be maximized. Accordingly, the efficiency of injecting the high-frequency signals from the transformers T3 and T4 to the distribution lines 25 and 27 can be increased.

The capacitor C1 disposed between the connection point A1 and the connection point A2 of the power distribution unit 5, and the transformers T1 and T2 constitute an LC lowpass filter. In order to avoid affecting the power of a commercial frequency, the inductance of the transformers T1 and T2 and the capacitance of the capacitor C1 need to be set properly such that the cutoff frequency of the LC lowpass filter is higher than the commercial frequency and is lower than the frequency of the high-frequency signals.

Similarly, the capacitor C2 disposed between the connection point B1 and the connection point B2 of the power distribution unit 5, and the transformers T3 and T4 constitute an LC lowpass filter. In order to avoid affecting the power of a commercial frequency, the inductance of the transformers T3 and T4 and the capacitance of the capacitor C2 need to be set properly such that the cutoff frequency of the LC lowpass filter is higher than the commercial frequency and is lower than the frequency of the high-frequency signals.

As explained above, the high-frequency signals for power line communication that are injected to and transmitted from the distribution lines 21 and 22 can be extracted by the transformers T1 and T2. The high-frequency signals can be then injected to the distribution lines 27 and 28 by the transformers T3 and T4 via the cables 29 and 30. Because the distribution lines and the transformers are symmetrically provided around the power distribution unit 5, it is also possible to transmit high-frequency signals in the opposite direction. That is, high-frequency signals for power line communication that are injected to and transmitted from the distribution lines 27 and 28 can be extracted by the transformers T3 and T4. These high-frequency signals can be injected to the distribution lines 21 and 22 by the transformers T1 and T2 via the cables 29 and 30.

As described above, according to the first embodiment, split cores that function as transformers are installed on two distribution lines at both sides of the power distribution unit respectively and are connected together as means for extracting high-frequency signals from the distribution lines and injecting these signals to the other distribution lines. At the same time, capacitors are installed at connection ends between the power distribution unit and the distribution lines. Therefore, high-frequency signals can be bypassed without giving the influence of loss characteristics of the power distribution unit to the frequency band of the high-frequency signals.

In this case, based on the capacitors installed at the connection end between the power distribution unit and the distribution lines, the efficiency of extracting and the efficiency of injecting the high-frequency signals by the cores that function as transformers can be increased.

Furthermore, because the cores functioning as transformers that are disposed on the distribution lines are split type, the cores can sandwich the distribution line. Each capacitor is connected to the connection end between the power distribution unit and the distribution lines, and a connection part is exposed. Therefore, the installation work can be carried out in the active state of the distribution lines. In other words, uninterruptible engineering works can be carried out.

### Second Embodiment

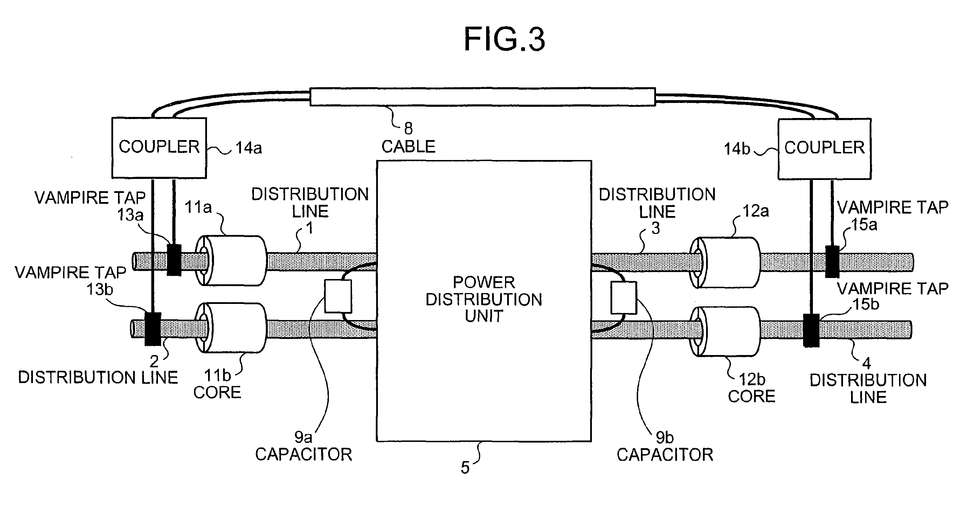

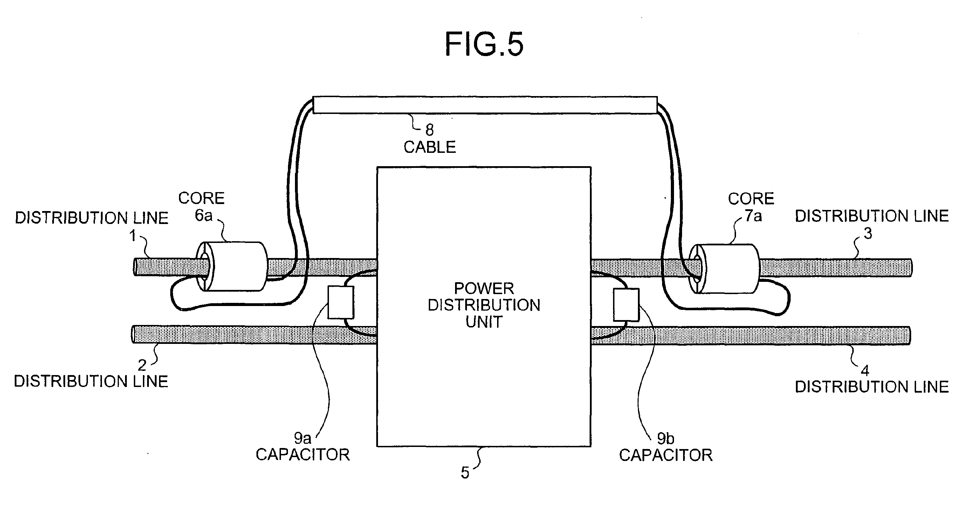

Fig. 3 is a layout diagram of a high-frequency bypass device according to a second embodiment of the present invention. Fig. 4 is an equivalent circuit diagram of a circuit configuration of the high-frequency bypass device shown in Fig. 3. In Figs. 3 and 4, constituent elements that are the same as or identical to those shown in Figs. 1 and 2 (the first embodiment) are designated with like reference numerals. Parts that relate to the second embodiment are mainly explained below.

As shown in Fig. 3, according to the high-frequency bypass device of the second embodiment, the distribution lines 1 and 2 are installed with split cores 11a and 11b in place of the split cores 6a and 6b in the configuration shown in Fig. 1 (the first embodiment). The distribution lines 3 and 4 are installed with split cores 12a and 12b in place of the split cores 7a and 7b. In the second embodiment, these cores are not connected to the cable, and function simply as inductors.

Furthermore, in the second embodiment, as shown in Fig. 3, vampire taps 13a and 13b are installed on the distribution lines 1 and 2 at positions farther from the power distribution unit 5 than from the cores 11a and 11b respectively. A coupler 14a is connected to the vampire taps 13a and 13b respectively. Vampire taps 15a and 15b are installed on the distribution lines 3 and 4 at positions farther from the power distribution unit 5 than from the cores 12a and 12b respectively. A coupler 14b is connected to the vampire taps 15a and 15b respectively. The coupler 14a and the coupler 14b are connected together via the cable 8.

The coupler 14a is a high-frequency input and output unit consisting of a transformer and a capacitor. The coupler 14a has a function of extracting high-frequency signals that are superimposed on power on the distribution lines 1 and 2 input from the vampire taps 13a and 13b, and transmitting these signals to the cable 8, and a function of outputting the high-frequency signals transmitted to the cable 8, to the vampire taps 13a and 13b respectively, and superimposing these signals onto the power on the distribution lines 1 and 2 respectively.

Similarly, the coupler 14b is a high-frequency input and output unit consisting of a transformer and a capacitor. The coupler 14b has a function of extracting high-frequency signals that are superimposed on power on the distribution lines 3 and 4 input from the vampire taps 15a and 15b, and transmitting these signals to the cable 8, and a function of outputting the high-frequency signals transmitted to the cable 8, to the vampire taps 15a and 15b respectively, and superimposing these signals onto the power on the distribution lines 3 and 4 respectively.

Therefore, a circuit configuration of the high-frequency bypass device shown in Fig. 3 becomes as shown in Fig. 4. At one end of the power distribution unit 5, one end of the distribution line 21 of which the other end is connected to the outside is connected to the coupler 14a and is also connected to one end of the distribution line 23 via an inductor L1 formed by the core 11a. The other end of the distribution line 23 is connected to the connection point A1 at one end of the power distribution unit 5. The above explains the relationship between the distribution line 1, the coupler 14a via the vampire tap 13a, and the core 11a shown in Fig. 3.

One end of the distribution line 22 of which the other end is connected to the outside is connected to the coupler 14a and is also connected to one end of the distribution line 24 via an inductor L2 formed by the core 11b. The other end of the distribution line 24 is connected to the connection point A2 at one end of the power distribution unit 5. The above explains the relationship between the distribution line 2, the coupler 14a via the vampire tap 13b, and the core 11b shown in Fig. 3.

Similarly, at the other end of the power distribution unit, one end of the distribution line 27 of which the other end is connected to the outside is connected to the coupler 14b and is also connected to one end of the distribution line 25 via an inductor L3 formed by the core 12a. The other end of the distribution line 25 is connected to the connection point B1 at the other end of the power distribution unit 5. The above explains the relationship between the distribution line 3, the coupler 14b via the vampire tap 15a, and the core 12a shown in Fig. 3.

One end of the distribution line 28 of which the other end is connected to the outside is connected to the coupler 14b and is also connected to one end of the distribution line 26 via an inductor L4 formed by the core 12b. The other end of the distribution line 26 is connected to the connection point B1 at the other end of the power distribution unit 5. The above explains the relationship between the distribution line 4, the coupler 14b via the vampire tap 15b, and the core 12b shown in Fig. 3.

The coupler 14a and the coupler 14b are connected together via the cables 29 and 30. The above explains the relationship between the vampire taps 13a and 13b, the coupler 14a, the cable 8, the coupler 14b, and the vampire taps 15a and 15b shown in Fig. 3. The capacitors C1 and C2 are installed at the same positions as those according to the first embodiment.

The operation of the high-frequency bypass device according to the second embodiment having the above configuration is explained below with reference to Fig. 4.

High-frequency signals for power line communication are injected to one end of the distribution lines 21 and 22 respectively. A bypass method of extracting the high-frequency signals from the transformers T1 and T2 and injecting the high-frequency signals to the transformers T3 and T4 via the cables 29 and 30 is explained.

At one end of the distribution lines 21 and 22 respectively, power line communication signals as high-frequency signals and power of a commercial frequency are superimposed. Out of these signals, only the high-frequency signals are extracted to the cables 29 and 30 by the coupler 14a. The extracted high-frequency signals are transmitted to the coupler 14b through the cables 29 and 30, and are injected to the distribution lines 27 and 28 from the coupler 14b.

In this case, the inductors L1 and L2 have a function of increasing the high-frequency impedance between the distribution lines 21 and 22 at the connection point of the coupler 14a, and increasing the efficiency of extracting high-frequency signals from the connection point. In other words, the inductor L1 generates impedance due to inductance between the distribution lines 21 and 23. Similarly, the inductor L2 generates impedance due to inductance between the distribution lines 22 and 24. By increasing the sum of the impedance generated in the inductor L1, the impedance generated in the inductor L2, and the impedance between the connection points A1 and A2 of the power distribution unit 5, a potential difference that can be extracted from between the distribution lines 21 and 22 at the connection point of the coupler 14a can be increased.

The capacitor C1 disposed between the connection points A1 and A2 of the power distribution unit 5 has a function of decreasing the high-frequency impedance between the connection points A1 and A2, thereby avoiding the influence of loss characteristics of the power distribution unit 5 in a high-frequency band used by the high-frequency signals at the point of extracting the high-frequency signals. The power distribution unit 5 includes a distribution board, a columnar transformer, a capacitor bank or the like, which have their own loss characteristics.

In this case, because the capacitor C1 is disposed between the connection points A1 and A2 of the power distribution unit 5, high-frequency signals are short-circuited between the connection points A1 and A2. Therefore, loss characteristics of the power distribution unit 5 disappear at the extraction point of the high-frequency signals. In other words, the coupler 14a does not receive the influence of the characteristics of the power distribution unit 5, and the high-frequency signals can be extracted from the distribution lines 21 and 22 at the connection point, and can be transmitted to the cables 29 and 30.

Similarly, the inductors L3 and L4 have a function of increasing the high-frequency impedance between the distribution lines 27 and 28 at the connection point of the coupler 14b, and increasing the efficiency of injecting high-frequency signals from the connection point. In other words, the inductor L3 generates impedance due to inductance between the distribution lines 25 and 27. Similarly, the inductor L4 generates impedance due to inductance between the distribution lines 26 and 28.

By increasing the sum of the impedance generated in the inductor L3, the impedance generated in the inductor L4, and the impedance between the connection points B1 and B2 of the power distribution unit 5, a potential difference that can be injected to between the distribution lines 27 and 28 can be increased.

The capacitor C2 disposed between the connection points B1 and B2 of the power distribution unit 5 has a function of decreasing the high-frequency impedance between the connection points B1 and B2, thereby avoiding the influence of loss characteristics of the power distribution unit 5 in a high-frequency band used by the high-frequency signals at the point of extracting the high-frequency signals. The power distribution unit 5 includes a distribution board, a columnar transformer, a capacitor bank or the like, which have their own loss characteristics.

In this case, because the capacitor C2 is disposed between the connection points B1 and B2 of the power distribution unit 5, high-frequency signals are short-circuited between the connection points B1 and B2. Therefore, loss characteristics of the power distribution unit 5 disappear at the injection point of the high-frequency signals. In other words, the coupler 14b does not receive the influence of the characteristics of the power distribution unit 5, and the high-frequency signals can be extracted from the cables 29 and 30, and can be injected into between the distribution lines 25 and 27 at the connection point.

The capacitor C1 disposed between the connection points A1 and A2 of the power distribution unit 5, and the inductors L1 and L2 constitute an LC lowpass filter. In order to avoid affecting the power of a commercial frequency, the inductance of the inductors L1 and L2 and the capacitance of the capacitor C1 need to be set properly such that the cutoff frequency of the LC lowpass filter is higher than the commercial frequency and is lower than the frequency of the high-frequency signals.

Similarly, the capacitor C2 disposed between the connection points B1 and B2 of the power distribution unit 5, and the inductors L3 and L4 constitute an LC lowpass filter. In order to avoid affecting the power of a commercial frequency, the inductance of the inductors L3 and L4 and the capacitance of the capacitor C2 need to be set properly such that the cutoff frequency of the LC lowpass filter is higher than the commercial frequency and is lower than the frequency of the high-frequency signals.

As explained above, the high-frequency signals for power line communication that are injected to and transmitted from the distribution lines 21 and 22 can be extracted by the vampire taps 13a and 13b and the coupler 14a. The high-frequency signals can be then injected to the distribution lines 27 and 28 by the coupler 14b and the vampire taps 15a and 15b via the cables 29 and 30. Because the distribution lines, the couplers, and the vampire taps are symmetrically provided around the power distribution unit 5, it is also possible to transmit high-frequency signals in the opposite direction. That is, high-frequency signals for power line communication that are injected to and transmitted from the distribution lines 27 and 28 can be extracted by the vampire taps 15a and 15b and the coupler 14b. These high-frequency signals can be injected to the distribution lines 21 and 22 by the coupler 14a and the vampire taps 13a and 13b via the cables 29 and 30.

As described above, according to the second embodiment, vampire taps and a coupler are installed on two distribution lines at both sides of the power distribution unit respectively and the couplers are connected to each other via a cable as means for extracting high-frequency signals from the distribution lines and injecting these signals to the other distribution lines. At the same time, split cores that function as inductors are installed on two distribution lines at both sides of the power distribution unit, and a capacitor is disposed at connection points between the power distribution unit and the distribution lines. Therefore, high-frequency signals can be bypassed without giving the influence of loss characteristics of the power distribution unit to the frequency band of the high-frequency signals.

In this case, because the cores that function as inductors are installed between the power distribution unit and the vampire taps for extracting and injecting high-frequency signals from the distribution lines, the efficiency of extracting and the efficiency of injecting the high-frequency signals to be bypassed can be increased.

Furthermore, because the cores functioning as inductors that are disposed on the distribution lines are split type, the cores can sandwich the distribution line. Each capacitor is connected to the connection end between the power distribution unit and the distribution lines, and a connection part is exposed. The vampire taps are used to connect the distribution lines for bypass. Therefore, the installation work can be carried out in the active state of the distribution lines. In other words, uninterruptible engineering works can be carried out.

### Third Embodiment

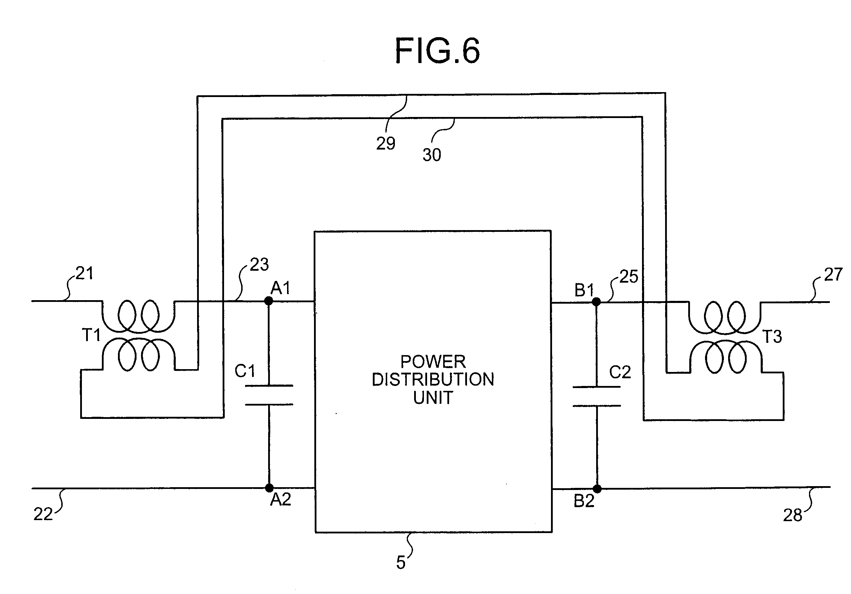

Fig. 5 is a layout diagram of a high-frequency bypass device according to a third embodiment of the present invention. Fig. 6 is an equivalent circuit diagram of a circuit configuration of the high-frequency bypass device shown in Fig. 5. In Figs. 5 and 6, constituent elements that are the same as or identical to those shown in Figs. 1 and 2 (the first embodiment) are designated with like reference numerals. Parts that relate to the third embodiment are mainly explained below.

As shown in Fig. 5, according to the high-frequency bypass device of the third embodiment, a split core that functions as a transformer is disposed on any one of the distribution lines 1 and 2, and a split core that functions as a transformer is not disposed on the other distribution line, in the configuration shown in Fig. 1 (the first embodiment). As shown in Fig. 5, the split core 6a is disposed on the distribution line 1, and the split core 6b is omitted from the distribution line 2.

A split core that functions as a transformer is disposed on any one of the distribution lines 3 and 4, and a split core that functions as a transformer is not disposed on the other distribution line. As shown in Fig. 5, the split core 7a is disposed on the distribution line 3, and the split core 7b is omitted from the distribution line 4.

Therefore, a circuit configuration of the high-frequency bypass device shown in Fig. 5 becomes as shown in Fig. 6. At one end of the power distribution unit 5, one end of the distribution line 21 of which the other end is connected to the outside is connected to one end of the distribution line 23 via one input and output winding of the transformer T1 formed by the core 6a. The other end of the distribution line 23 is connected to the connection point A1 at one end of the power distribution unit 5. The above explains the relationship between the distribution line 1 and the core 6a shown in Fig. 5. On the other hand, one end of the distribution line 22 of which the other end is connected to the outside is connected to the connection point A2 at one end of the power distribution unit 5.

Similarly, at the other end of the power distribution unit 5, one end of the distribution line 27 of which the other end is connected to the outside is connected to one end of the distribution line 25 via one input and output winding of the transformer T3 formed by the core 7a. The other end of the distribution line 25 is connected to the connection point B1 at the other end of the power distribution unit 5. The above explains the relationship between the distribution line 3 and the core 7a shown in Fig. 5. On the other hand, one end of the distribution line 28 of which the other end is connected to the outside is connected to the connection point B2 at the end of the power distribution unit 5.

One end of the other input and output winding of the transformer T1 and one end of the other input and output winding of the transformer T3 are connected to each other via the cable 29. The other end of the other input and output winding of the transformer T1 and the other end of the other input and output winding of the transformer T3 are connected to each other via the cable 30. The above explains the relationship between the core 6a, the cable 8, and the core shown in Fig. 5. The capacitors C1 and C2 are disposed at the same positions as those according to the first embodiment.

As explained above, the operation of the high-frequency bypass device having the above configuration according to the third embodiment is similar to that according to the first embodiment. Therefore, the explanation thereof is omitted.

According to the third embodiment, the effect from the first embodiment is also obtained. Furthermore, because the number of the cores is halved, the installation work can be further facilitated. However, because one core is disposed on only one of the two distribution lines, the distribution lines are unbalanced. In other words, common mode noise increases.

### Fourth Embodiment

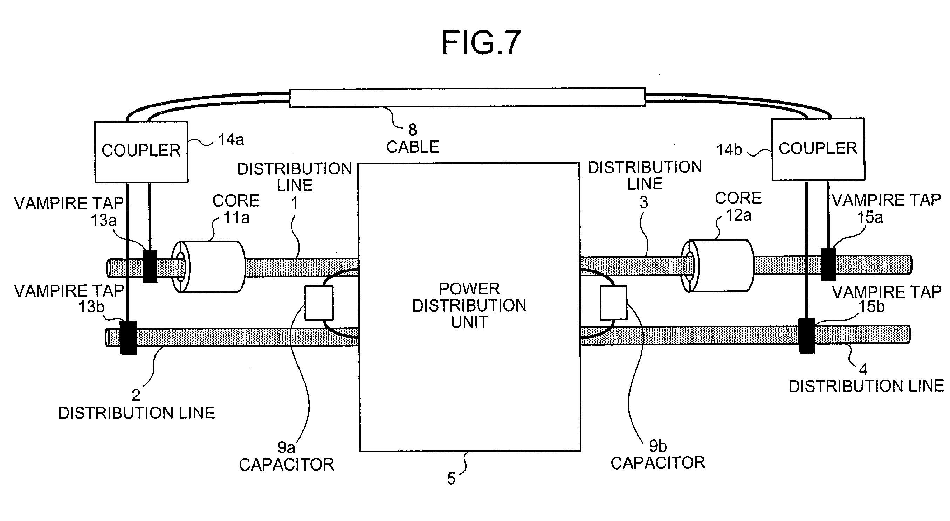

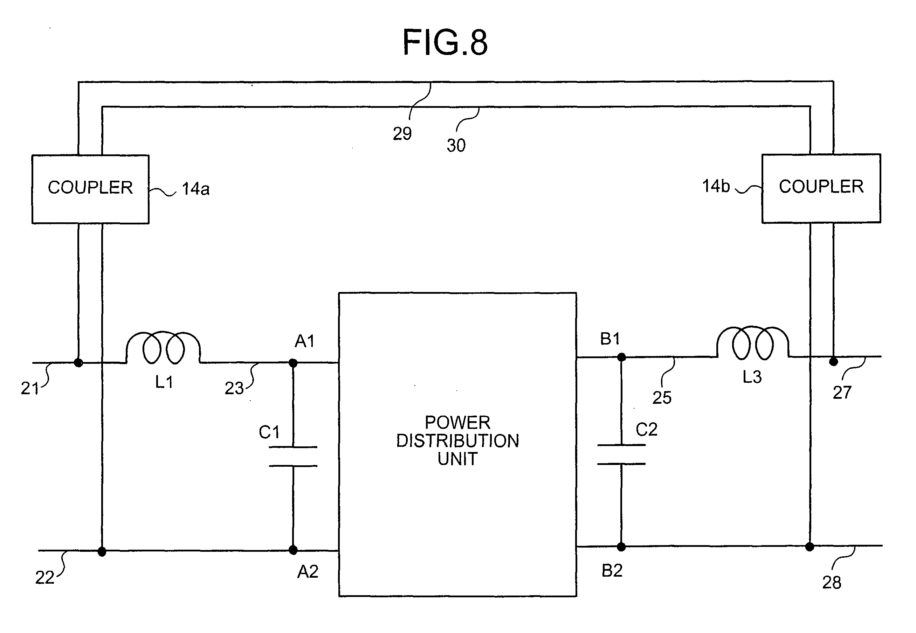

Fig. 7 is a layout diagram of a high-frequency bypass device according to a fourth embodiment of the present invention. Fig. 8 is an equivalent circuit diagram of a circuit configuration of the high-frequency bypass device shown in Fig. 7. In Figs. 7 and 8, constituent elements that are the same as or identical to those shown in Figs. 3 and 4 (the second embodiment) are designated with like reference numerals. Parts that relate to the fourth embodiment are mainly explained below.

As shown in Fig. 7, according to the high-frequency bypass device of the fourth embodiment, a split core that functions as an inductor is disposed on any one of the distribution lines 1 and 2, and a split core that functions as an inductor is not disposed on the other distribution line, in the configuration shown in Fig. 3 (the second embodiment). As shown in Fig. 7, the split core 11a that functions as an inductor is disposed on the distribution line 1, and the split core 11b that functions as an inductor is omitted from the distribution line 2.

A split core that functions as an inductor is disposed on any one of the distribution lines 3 and 4, and a split core that functions as an inductor is not disposed on the other distribution line. As shown in Fig. 7, the split core 12a that functions as an inductor is disposed on the distribution line 3, and the split core 12b that functions as an inductor is omitted from the distribution line 4.

Therefore, a circuit configuration of the high-frequency bypass device shown in Fig. 7 becomes as shown in Fig. 8. At one end of the power distribution unit 5, one end of the distribution line 21 of which the other end is connected to the outside is connected to the coupler 14a, and is also connected to one end of the distribution line 23 via the inductor L1 formed by the core 11a. The other end of the distribution line 23 is connected to the connection point A1 at one end of the power distribution unit 5. The above explains the relationship between the distribution line 1, the coupler 14a via the vampire tap 13a, and the core 11a shown in Fig. 7. On the other hand, one end of the distribution line 22 of which the other end is connected to the outside is connected to the connection point A2 at one end of the power distribution unit 5.

Similarly, at the other end of the power distribution unit 5, one end of the distribution line 27 of which the other end is connected to the outside is connected to the coupler 14b, and is also connected to one end of the distribution line 25 via the inductor L3 formed by the core 12a. The other end of the distribution line 25 is connected to the connection point B1 at one end of the power distribution unit 5. The above explains the relationship between the distribution line 3, the coupler 14b via the vampire tap 15a, and the core 12a. On the other hand, one end of the distribution line 28 of which the other end is connected to the outside is connected to the connection point B1 at the other end of the power distribution unit 5.

The capacitors C1 and C2 are disposed at the same positions as those according to the first embodiment. The relationship between the distribution lines 21 and 22, the coupler 14a, the cables 29 and 30, the coupler 14b, and the distribution lines 27 and 28 is similar to that shown in Fig. 4.

As explained above, the operation of the high-frequency bypass device having the above configuration according to the fourth embodiment is similar to that according to the second embodiment. Therefore, the explanation thereof is omitted.

According to the fourth embodiment, while the effect from the second embodiment is obtained, because the number of the cores is halved, the installation work can be further facilitated. However, because one core is disposed on only one of the two distribution lines, the distribution lines are unbalanced. In other words, common mode noise increases.

While in the above first to the fourth embodiments, it is explained that the communication device is a power line communication device, the communication path is a distribution line, and the device to be bypassed is a power distribution unit, the present invention is not limited thereto. In other words, according to the present invention, the communication device can be other device than the power line communication device, the communication path can be a metal electric wire other than the distribution line, and the device to be bypassed can be other than the power distribution unit.

For example, a switch is present in the middle of two electric wires. When the high-frequency bypass device according to the present invention is applied when the switch is open-circuited, the electric wires can be used as communication paths by connecting both ends in high-frequency, by bypassing the switch.

For example, when a modem can be connected to an electric wire for controlling a device or an electric wire for a speaker, consider that two of these electric wires are used to carry out modem communications in an electric railcar. In this case, when a device that interrupts communication is present in the middle of the electric wires (that is, when the characteristics of the device affect a modem signal), the high-frequency bypass device according to the present invention can be applied to bypass the interruption device. With this arrangement, a modem communication can be carried out using the electric wire for controlling a device or the electric wire for a speaker in the electric railcar.

Furthermore, consider that a modem is connected to any optional two power supply lines out of plural power supply lines to carry out communications in an electric railcar. When a communication interruption device is present in the middle, such as a connection to a motor (in this case, characteristics of the motor affect the modem signal) or an open-circuit power source switch, the high-frequency bypass device according to the present invention can be applied to bypass the interruption device. With this arrangement, a modem communication can be carried out using optional two power supply lines out of plural power supply lines.

### INDUSTRIAL APPLICABILITY

According to the present invention, communication signals on electric wires can be transmitted by bypassing a communication interruption device present in the middle of the wires without depending on the type of the device. The high-frequency bypass device according to the present invention can transmit high-frequency signals using optional electric wires as well as achieving power line communication for transmitting high-frequency signals using power lines. The high-frequency bypass device can be installed easily in the active state of power supply lines.

## Claims

1. A high-frequency bypass device for bypassing a communication interruption device that is present in the middle of two electric wires, the high-frequency bypass device comprising:
split cores that are disposed on the two electric wires at both ends of the communication interruption device;
capacitors that are connected to connection ends of the electric wires at both ends of the communication interruption device; and
a cable that connects between the corresponding split cores at both ends of the communication interruption device such that the split cores function as transformers.

2. A high-frequency bypass device for bypassing a communication interruption device that is present in the middle of two electric wires, the high-frequency bypass device comprising:
vampire taps that are connected to the two electric wires at both ends of the communication interruption device;
a cable that connects between the corresponding vampire taps at both ends of the communication interruption device via high-frequency input and output units;
split cores that are disposed as inductors on the two electric wires respectively between the layout positions of the vampire taps and the communication interruption device, at both ends of the communication interruption device; and
capacitors that are connected to between connection ends of the electric wires, at both ends of the communication interruption device.

3. A high-frequency bypass device for bypassing a communication interruption device that is present in the middle of two electric wires, the high-frequency bypass device comprising:
split cores that are disposed on one of the two electric wires at both ends of the communication interruption device;
capacitors that are connected to connection ends of the electric wires at both ends of the communication interruption device; and
a cable that connects between the corresponding split cores at both ends of the communication interruption device such that the split cores function as transformers.

4. A high-frequency bypass device for bypassing a communication interruption device that is present in the middle of two electric wires, the high-frequency bypass device comprising:
vampire taps that are connected to the two electric wires at both ends of the communication interruption device;
a cable that connects between the corresponding vampire taps at both ends of the communication interruption device via high-frequency input and output units;
split cores that are disposed as inductors on one of the two electric wires between the layout positions of the vampire taps and the communication interruption device, at both ends of the communication interruption device; and
capacitors that are connected to between connection ends of the electric wires, at both ends of the communication interruption device.
